Europäisches Patentamt

European Patent Office

Office européen des brevets

(19)

(12)

Numéro de publication: **0 318 666**

**A2**

## (12) DEMANDE DE BREVET EUROPEEN

(21) Numéro de dépôt: **88116162.4**

(22) Date de dépôt: **30.09.88**

(51) Int. Cl.4: **G02C 5/14 , G02C 11/00**

(30) Priorité: **01.12.87 CH 4667/87**

(43) Date de publication de la demande:
**07.06.89 Bulletin 89/23**

(84) Etats contractants désignés:
**AT BE CH DE ES FR GB GR IT LI LU NL SE**

(71) Demandeur: **PLAM S.A.**
**3, rue Ami-Lullin**
**CH-1207 Genève(CH)**

(72) Inventeur: **Monnay, Pierre**
**72, Bd. St-Georges**
**CH-1205 Genève(CH)**

(74) Mandataire: **Micheli & Cie**
**118, rue du Rhône Case postale 47**
**CH-1211 Genève 6(CH)**

(54) **Monture de lunettes.**

(57) La monture de lunettes comporte une portion de branche amovible (5) munie de moyens d'écriture (10, 11) faisant saillie axialement du côté de l'extrémité destinée à être accouplée au reste de la monture.

**FIG. 1**

EP 0 318 666 A2

# MONTURE DE LUNETTES

La présente invention se rapporte à une monture de lunettes, notamment de lunettes de soleil, comportant une portion de branche amovible.

On connaît déjà des montures du type précité dans lesquelles la portion de branche amovible est destinée à être remplacée par une autre portion de branche présentant par exemple une extrémité libre de forme différente pour un accrochage différent avec l'oreille.

Le but de cette invention consiste à fournir une monture de lunettes dans laquelle une des branches présente une portion amovible utilisable séparément comme moyen d'écriture.

La monture de lunettes selon l'invention, visant à atteindre le but ci-dessus, présente les caractéristiques énoncées dans la revendication 1. Un autre objet de cette invention consiste en un stylo dont le corps est constitué par une portion de branche de monture de lunettes.

Le dessin annexé illustre schématiquement et à titre d'exemple une forme d'exécution de la monture de lunettes selon l'invention.

La figure 1 en est une vue générale en perspective, avec la portion de branche-stylo séparée du reste de la monture.

La figure 2 est une vue de dessus partiellement en coupe de la branche comportant la portion amovible.

La figure 3 est une vue en plan de la portion de branche de monture utilisable comme stylo.

Comme illustré sur le dessin annexé, la monture de lunettes comporte, de manière connue en soi, une garniture 1 formant deux ouvertures destinées à la fixation de verres, ainsi qu'une première branche latérale 2 montée pivotante d'un côté de la garniture 1 par une charnière 3 présentant un axe vertical.

De l'autre côté de la garniture 1, par rapport à la première branche latérale 2, une amorce de seconde branche 4 est montée pivotante sur une charnière 3 identique à celle de la première branche 1. Cette amorce de seconde branche 4 est destinée recevoir, en position de service comme lunettes, une portion de branche 5 amovible, illustrée ici en position non accouplée avec ladite amorce 4.

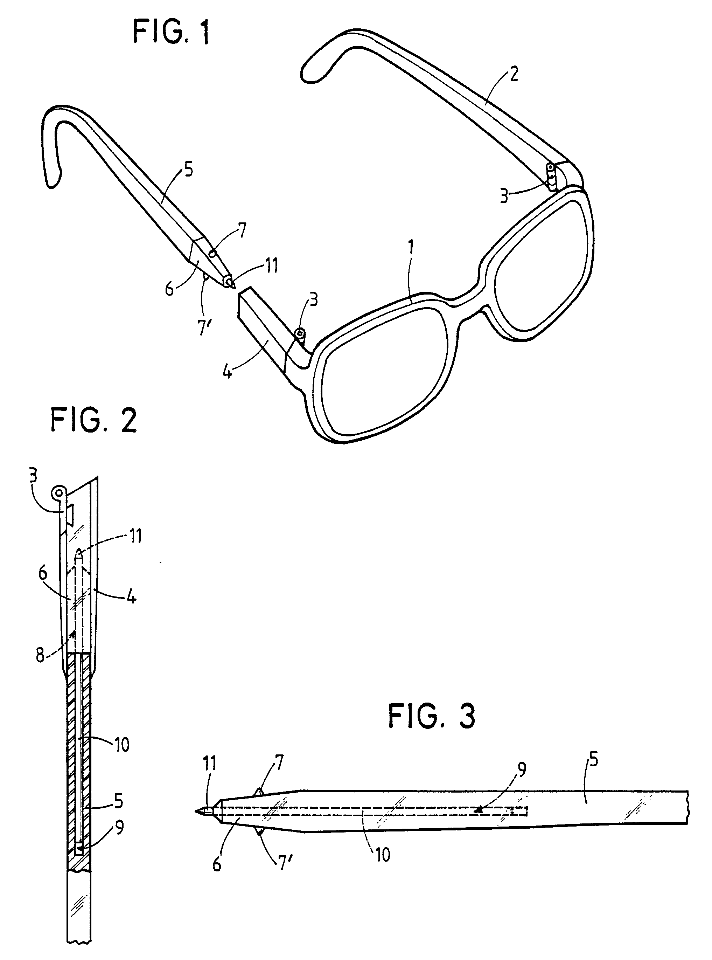

Comme représenté plus en détail sur les figures 2 et 3, la portion de branche 5 amovible présente à l'extrémité opposée son extrémité libre des moyens d'accouplement constitués ici par une forme conique 6 et par deux tétons 7, 7' respectivement supérieur et inférieur. Cette extrémité antérieure conique 6 est destinée à être introduite pour compléter la monture de lunettes dans un évidement 8 que présente l'amorce de branche 4. Cet évidement comporte en effet des parois respectivement supérieure et inférieure de même forme que l'extrémité antérieure de la portion de branche 5, ainsi que deux encoches destinées à recevoir les tétons 7, 7' pour que les deux pièces accouplées soient maintenues dans cette position par une sorte de clipsage. Bien entendu, d'autres types de moyens d'accouplement peuvent être prévus entre les deux éléments séparables de la monture.

Enfin, la portion de branche 5 comporte un orifice axial 9 ouvert à l'extrémité de ladite portion et destiné à recevoir, de manière amovible ou non, une cartouche de stylo 10 par exemple, de telle sorte que la tête de cette cartouche 11 comportant la bille à écrire fasse saillie axialement à l'extérieur de la portion de branche 5. Une fois séparée du reste de la monture 1, par désaccouplement de l'amorce de branche 4, la portion de branche amovible 5 peut donc être utilisée séparément comme un stylo.

Le stylo ainsi formé par la portion de branche séparable du reste de la monture de lunettes peut s'avérer utile pour les loisirs, l'invention s'appliquant de préférence à des lunettes de soleil, notamment réalisées avec une monture en matière plastique.

## Revendications

1. Monture de lunettes comportant une portion de branche amovible, caractérisée par le fait que cette portion de branche est munie de moyens d'écriture faisant saillie axialement du côté de l'extrémité destinée à étre accouplée au reste de la monture.

2. Monture de lunettes selon la revendication 1, caractérisée par le fait qu'elle comporte une amorce de branche montée pivotante par une charnière d'un coté de la garniture centrale de la monture, cette amorce de branche présentant un évidement axial destiné à recevoir l'extrémité antérieure de la portion de branche amovible.

3. Monture de lunettes selon la revendication 2, caractérisée par le fait que l'extrémité antérieure de la portion de branche amovible présente une forme conique et que l'évidement axial de l'amorce de branche présente une forme conique correspondante, et par le fait que ladite extrémité antérieure présente au moins un téton en saillie coopérant en position d'accouplement avec au moins une encoche correspondante que présente ledit évidement axial.

4. Monture de lunettes selon l'une des revendications 1 à 3, caractérisée par le fait que la portion de branche amovible présente un orifice axial, dans lequel est disposé une cartouche de stylo, de telle sorte que l'extrémité d'écriture de cette cartouche fasse saillie axialement l'extérieur de l'extrémité de ladite portion destinée à étre accouplée au reste de la monture.

5. Stylo dont le corps contenant les moyens d'écriture est constitué par une portion de branche de monture de lunettes.

# FIG. 1

# FIG. 2

# FIG. 3